# EUROPÄISCHE PATENTSCHRIFT

(11) **EP 1 820 755 B1**
(45) Veröffentlichungstag und Bekanntmachung des Hinweises auf die Patenterteilung: **10.12.2008**
(21) Anmeldenummer: 07002589.5
(22) Anmeldetag: 07.02.2007
(51) Int. Cl.: B65G 19/02, B61B 10/02

(54) **Transport-System für hängende Gegenstände**
Transport system for hanging objects
Système de transport pour objets suspendus

(30) Priorität: 21.02.2006 DE 102006007936
(43) Veröffentlichungstag der Anmeldung: 22.08.2007
(73) Patentinhaber: DÜRKOPP ADLER AKTIENGESELLSCHAFT, D-33719 Bielefeld (DE)
(72) Erfinder: Wend, Michael, 33619 Bielefeld (DE); Janzen, Paul, 33619 Bielefeld (DE)
(74) Vertreter: Hofmann, Matthias

(56) Entgegenhaltungen:
- EP-A1- 1 273 534
- DE-A1- 1 506 966
- DE-B- 1 188 000
- GB-A- 2 264 277
- US-A- 3 196 804
- US-A- 3 343 498

## Beschreibung

Die Erfindung betrifft ein Transport-System für hängende Gegenstände nach dem Oberbegriff des Anspruchs 1.

Ein derartiges Transport-System ist aus der US 3,196,804 A oder der DE 1 188000B bekannt.

Die US 3,196,804 A zeigt ein Transport-System für hängende Gegenstände mit einer Haupt-Transportschiene mit Haupt-Förderkette und einer Neben-Transportschiene mit Neben-Förderkette. Die beiden Förderketten haben Mitnehmer, die zueinander benachbart angeordnet sind. Als Umlenkeinrichtung im Bereich einer Einschleusweiche für die Neben-Förderkette dient eine entsprechend gebogene Schiene. Die Neben-Förderkette hat Zähne, über die die Neben-Förderkette von der Haupt-Förderkette angetrieben ist.

Die DE 1 188 000 B zeigt eine Einschleusung für eine Neben-Förderstrecke in eine Haupt-Förderstrecke.

Weitere Transport-Systeme sowie Komponenten hiervon sind bekannt aus der DE 1 506 966 A1, der US 3,343,498 A, der GB 2 264 277 A und der EP 1 273 534 A1.

Ein Transport-System für hängende Gegenstände ist weiterhin bekannt durch offenkundige Vorbenutzung. Zudem ist ein Transport-System für hängende Gegenstände bekannt aus der DE 295 19 354 U1. Bei derartigen Transport-Systemen ist es für bestimmte Anwendungen erforderlich, über die Förderkette weitere Systemkomponenten anzutreiben. Hierzu wird Antriebsenergie von der Haupt-Förderkette auf die anderen Komponenten, zum Beispiel durch Zahnräder, übertragen. Sobald gefordert ist, dass die über die Förderkette angetriebenen weiteren Systemkomponenten mit dem Lauf der Förderkette exakt synchronisiert sein müssen, sind die aus der Förderkettenbewegung abgeleiteten Antriebe derartiger Systemkomponenten, die aus dem Stand der Technik bekannt sind, sehr aufwändig.

Es ist daher eine Aufgabe der vorliegenden Erfindung, ein Transport-System der eingangs genannten Art so weiterzubilden, dass weitere Systemkomponenten über die Förderkette bei einfachem Aufbau exakt synchronisiert angetrieben werden.

Diese Aufgabe ist erfindungsgemäß gelöst durch die im Kennzeichnungsteil des Anspruchs 1 angegebenen Merkmale.

Durch die erfindungsgemäße Neben-Fördereinrichtung wird die Förderkettenbewegung ohne weitere Übertragungsglieder und damit ideal synchron in eine Bewegung der Zahnkette übertragen. Die Zahnkette stützt sich im Antriebsabschnitt an der Umlenkeinrichtung ab, sodass ein sicherer Kraftschluss zwischen der Förderkette und der Zahnkette gegeben ist. Es resultiert ein kompakter und zusätzliche Teile vermeidender Aufbau der Kraftübertragung zwischen der Förderkette und der Neben-Fördereinrichtung. Erfindungsgemäß wurde insbesondere erkannt, dass zum Antrieb einer Neben-Fördereinrichtung eine direkte Kette/Kette-Antriebsverbindung hergestellt werden kann. In ganz anderem Zusammenhang, nämlich zum Antrieb der Haupt-Förderkette, ist ein Kette/Kette-Antrieb als sogenannter Caterpillarantrieb bekannt, bei dem eine Förderkette eines Transport-Systems über ein Antriebstrum einer Zahnkette, welches gegenüber der Förderkette an einem Leitblech abgestützt ist, angetrieben ist. Die Zahnketten-Mitnehmer ermöglichen im Antriebsabschnitt eine gemeinsame Mitnahme der Halteelemente durch die Förderketten-Mitnehmer einerseits und die Zahnketten-Mitnehmer andererseits. Dies erhöht die Mitnahmesicherheit im Antriebsabschnitt. Als Mitnehmerfähnchen ausgeführte Zahnketten-Mitnehmer, deren Mitnehmerflächen senkrecht auf einer Zahnketten-Laufrichtung stehen, erlauben eine flächige Auflage von Gegenanschlägen der Halteelemente. Dies erhöht nochmals die Mitnahmesicherheit. Ein Abstandsverhältnis, bei dem der Abstand benachbarter Zahnketten-Mitnehmer geringer ist als der Abstand benachbarter Förderketten-Mitnehmer ermöglicht, dass im Antriebsabschnitt die den Förderketten-Mitnehmern zugewandten Kantenabschnitte der Zahnketten-Mitnehmer den gleichen Abstand zueinander haben als die Förderketten-Mitnehmer. Dies reduziert die Gefahr eines Verkantens der Halteelemente, solange sie im Atatriebsabschnitt sowohl von den Förderketten-Mitnehmern als auch von den Zahnketten-Mitnehmern mitgenommen werden. Erfindungsgemäß wurde also erkannt, dass die Zahnkette, um korrekt mit der Förderkette beim Transport-System zusammenzuwirken, im langgestreckten Zustand einen geringeren Abstand benachbarter Mitnehmer aufweisen muss als die Förderkette.

Eine Weiche nach Anspruch 2 stellt eine Anwendung der Neben-Fördereinrichtung dar, bei der es auf die Synchronisierung des Laufs von Förder- und Zahnkette besonders ankommt. Da die Zahnkette nach Art eines Zahnrades in die Förderkette eingreift, ist hierdurch eine automatische Synchronisierung beim Ein- und Ausschleusen gegeben.

Über den Radius eines Umlenkrades nach Anspruch 3 lassen sich definierte Verhältnisse beim Kämmen zwischen den Zähnen und den Zahnaufnahmen einstellen. Hierdurch ist gewährleistet, über die Zahnkette die Neben-Fördereinrichtung sicher und synchronisiert zu betreiben.

Eine Zahnkette, die zum Einsatz im erfindungsgemäßen Transport-System aus Kunststoff-Gliedern aufgebaut ist, ist leicht. Die Form der Zähne und ggf. der Mitnehmer kann mit relativ geringem Aufwand an die jeweils vorliegenden Randbedingungen angepasst werden.

Ein Ausführungsbeispiel der Erfindung wird nachfolgend anhand der Zeichnung näher erläutert. In dieser zeigen:

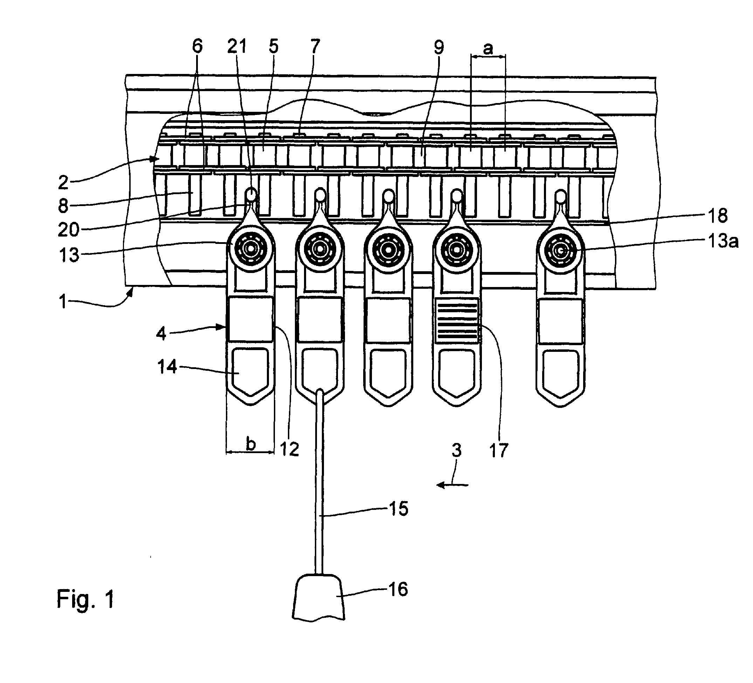

- Fig. 1: eine aufgebrochene Seiten-Längsansicht eines Teils eines Transport-Systems;
- Fig. 2: schematisch eine Aufsicht auf das Transport-System mit einer Weiche zum Ausschleusen von Halteelementen;

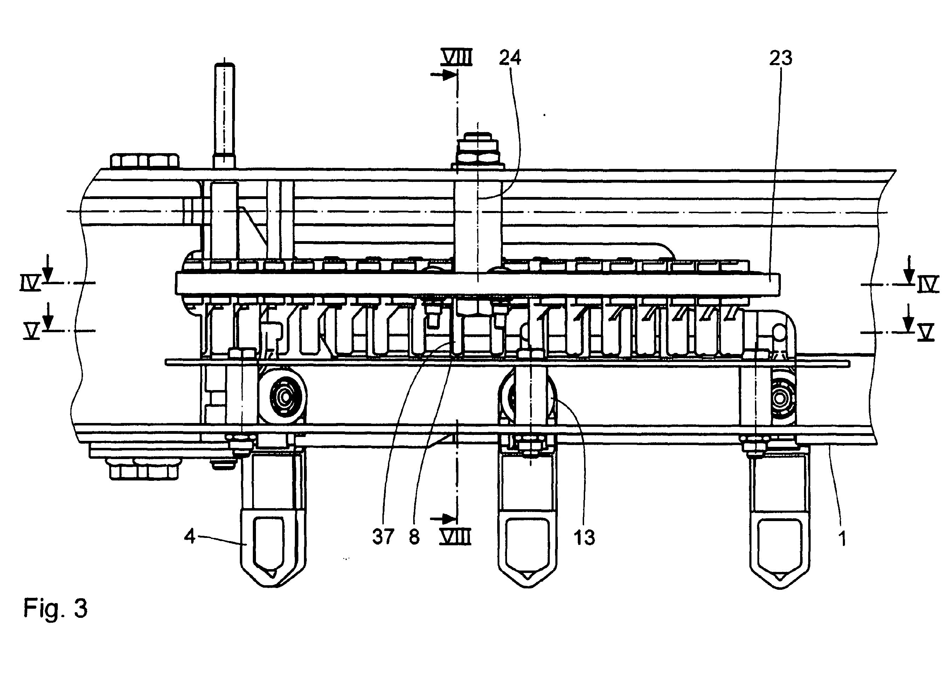

- Fig. 3: eine zu Fig. 1 ähnliche Seitenansicht des Transport-Systems im Bereich des Ausschleusortes;

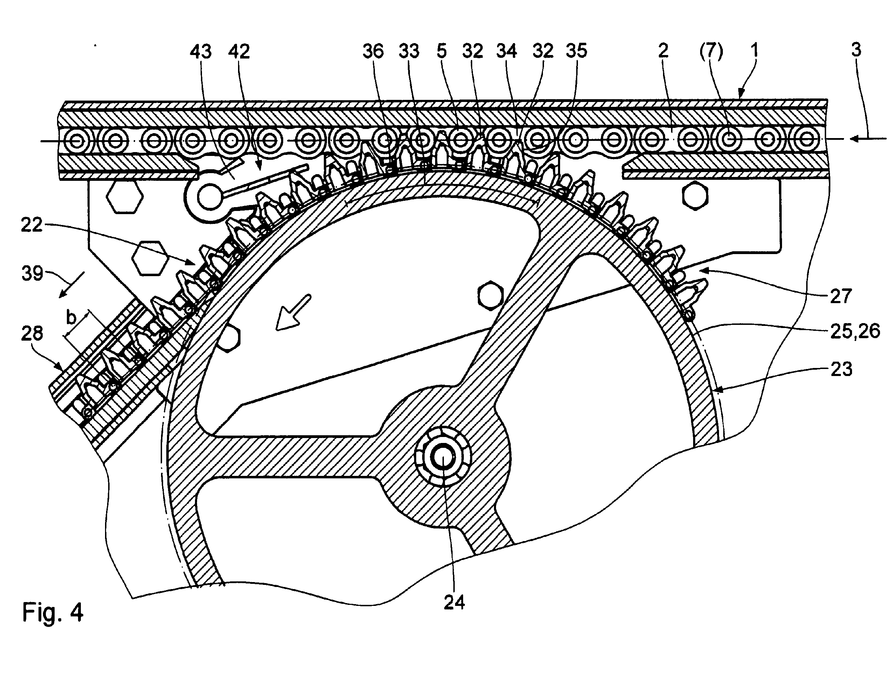

- Fig. 4: einen Schnitt gemäß Linie IV-IV in Fig. 3;

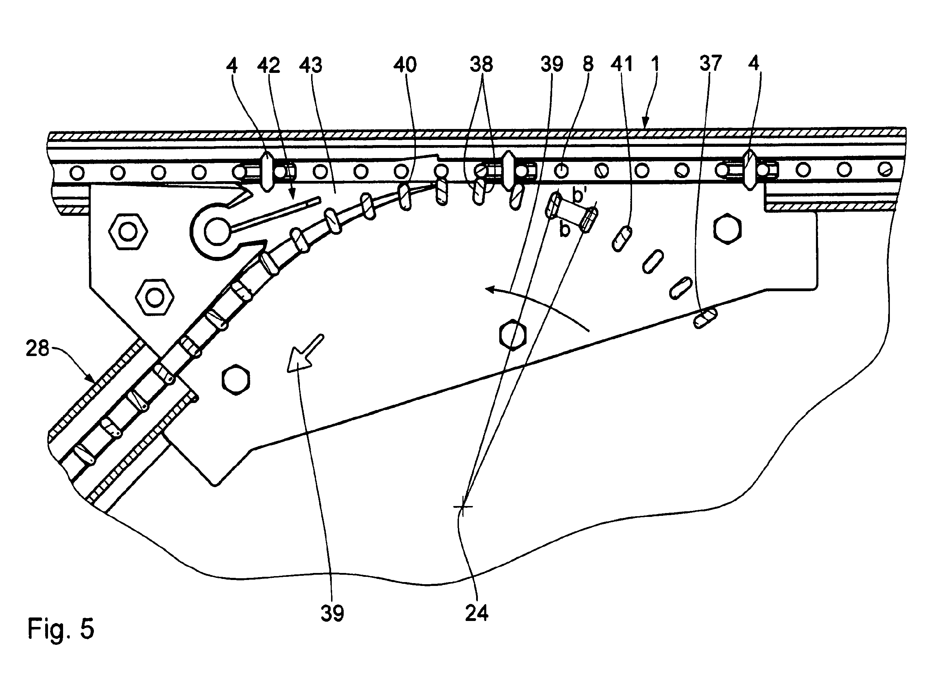

- Fig. 5: einen Schnitt gemäß Linie V-V in Fig. 3 mit einer Weiche in Durchschleusstellung;
- Fig. 6: eine weitere Momentaufnahme des Transport-Systems in einer Darstellung nach Fig. 5 mit der Weiche in Ausschleusstellung zu Beginn eines Ausschleusvorganges für ein Halteelement;
- Fig. 7: eine weitere Momentaufnahme im Anschluss an die Darstellung nach Fig. 6 mit ausgeschleustem Halteelement und in die Durchschleusstellung zurückgekehrter Weiche; und
- Fig. 8: einen Schnitt gemäß Linie VIII-VIII in Fig. 3.

Das in der Zeichnung dargestellte Transport-System hat eine Transportschiene 1, die mittels geeigneter Trageinrichtungen in einem Raum verlegbar ist. In der als Hohlkastenprofil ausgebildeten Transportschiene 1 ist eine Förderkette 2 angeordnet, die mittels nicht dargestellter Antriebsmittel in einer im Wesentlichen horizontalen Förderrichtung 3 antreibbar ist. Weiterhin sind Halteelemente 4 vorgesehen, die mittels der Förderkette 2 in der Transportschiene 1 bewegbar sind.

Bei der Förderkette 2 handelt es sich um eine metallische Rollen-Kette, die Rollen 5 aufweist, die in geringem Abstand voneinander mittels Verbindungslaschen 6 und Bolzen 7 miteinander verbunden sind. Die Bolzen 7 weisen nach unten überstehende, als Mitnehmer 8 dienende bolzenförmige Verlängerungen auf. Die Bolzen 7 mit den Mitnehmern 8 verlaufen im Wesentlichen vertikal, also senkrecht zur Förderrichtung 3.

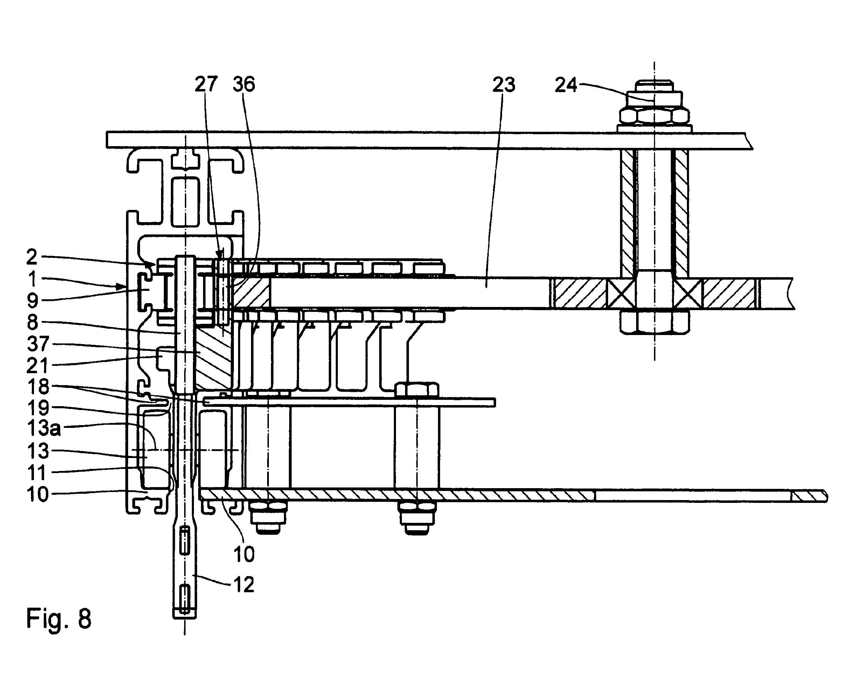

Längs der Transportschiene 1 sind auf Höhe der Rollen 5 formschlüssig in der Transportschiene 1 gehaltene Führungselemente 9 (vgl. auch Fig. 8) vorgesehen. Letztere untergreifen die Verbindungslaschen 6 der Förderkette 2, sodass letztere in der Transportschiene 1 geführt und gehalten ist.

Der Mittenabstand a benachbarter Mitnehmer 8 in der Transportschiene 1 in Förderrichtung 3 entspricht exakt der Teilung der Förderkette 2.

An der Unterseite der Transportschiene 1 sind zwei aufeinander zugerichtete Führungsstege 10 ausgebildet, zwischen denen ein sich in Förderrichtung 3 erstreckender Schlitz 11 ausgebildet ist. Durch diesen Schlitz 11 ragt ein flaches Tragteil 12 jedes Halteelements 4 nach unten aus der Transportschiene 1 heraus. In seinem oberen Bereich weist das Halteelement 4 beiderseits des Tragteils 12 je eine Laufrolle 13 auf, die sich jeweils auf einem der beiden Führungsstege 10 abstützt und hierauf in Förderrichtung 3 abrollbar ist. Pro Halteelement 4 ist also ein Paar von Laufrollen 13 vorhanden, die um eine gemeinsame Achse 13a drehbar sind, sodass das gesamte Halteelement 4 in der Transportschiene 1 um diese Achse 13a pendeln kann.

Das Tragteil 12 weist an seinem unteren Ende eine Aufnahmeöffnung 14 auf, in die ein Haken 15 eines Bügels 16 einhängbar ist, auf dem beispielsweise ein nicht dargestelltes, zu transportierendes Kleidungsstück hängt. Zwischen der Aufnahmeöffnung 14 und der Unterseite der Transportschiene 1 ist ein Identifizierungselement 17 angeordnet, bei dem es sich um einen Transponder oder auch um einen Barcode handeln kann. Das Identifizierungselement 17 liegt mit seiner Hauptfläche offen zur Seite hin, also quer zur Förderrichtung 3.

Die Transportschiene 1 weist unmittelbar oberhalb der Laufrollen 13 aufeinander zugerichtete horizontale Begrenzungsstege 18 auf, die zwischen sich einen Schlitz 19 begrenzen. Durch diesen erstreckt sich ein stielartiger Ansatz 20 des Halteelements 4, der einstückig am oberen Ende des Tragteils 12 ausgebildet ist. Am oberen Ende des Ansatzes 20 ist ein Anschlag 21 nach Art eines Querriegels ausgebildet, dessen Erstreckung horizontal quer zur Förderrichtung 3 größer ist als die Breite des Schlitzes 19.

Die Mitnehmer 8 der Förderkette 2 erstrecken sich bis unmittelbar oberhalb der Begrenzungsstege 18, sodass ein zwischen zwei Mitnehmern 8 befindliches Halteelement 4 durch Anlage des Anschlages 21 am entsprechenden Mitnehmer 8 immer zuverlässig mitgenommen wird.

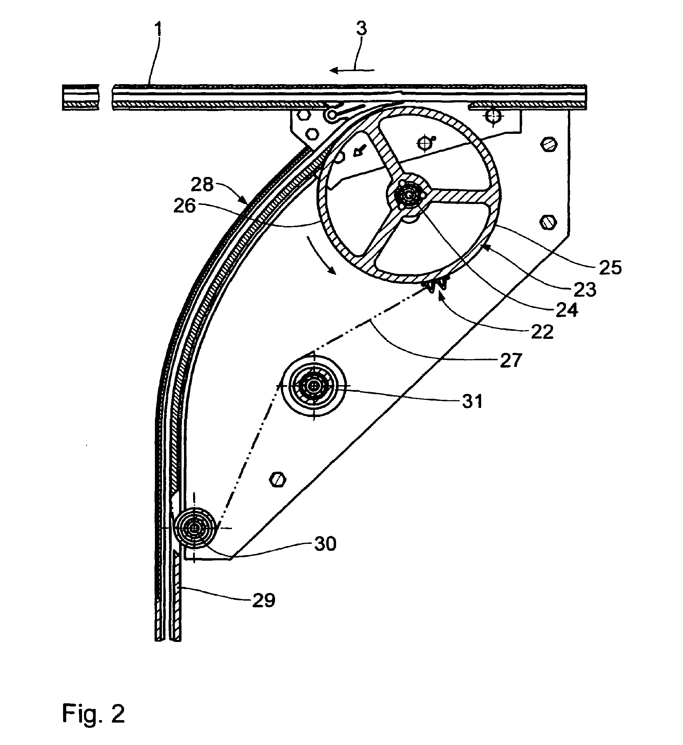

Neben der als Haupt-Förderkette dienenden Förderkette 2 weist das Transport-System zusätzlich eine Neben-Fördereinrichtung 22 auf. Letztere umfasst ein Umlenkrad 23, welches um eine Drehachse 24 parallel zu von den Bolzen 7 der Förderkette 2 vorgegebenen Gelenkachsen drehbar ist. An einem äußeren Umfangsabschnitt 25 des Umlenkrades 23, der mehr als die Hälfte einer gesamten Umfangswand 26 des Umlenkrades ausmacht, liegt eine Zahnkette 27 an. Von letzterer sind in Fig. 2 nur zwei Kettenglieder dargestellt. Der restliche Verlauf ist in Fig. 2 schematisch angedeutet. Über die Anlage der Zahnkette 27 am Umfangsabschnitt 25 ist die Zahnkette 27 mit dem Umlenkrad 23 reibschlüssig verbunden.

Die Zahnkette 27 ist im Anschluss an ihre Anlage am Umfangsabschnitt 25 geführt in einer Neben-Transportschiene 28. Letztere hat zunächst einen in Fig. 2 dargestellten, leicht gebogenen Verlauf, bis die Neben-Transportschiene 28 in einen sich rechtwinklig zur Transportschiene 1 verlaufenden geraden Schienenabschnitt 29 übergeht. In diesem Übergangsbereich wird die Zahnkette 27 aus der Neben-Transportschiene 28 herausgeführt und läuft um eine Umlenkrolle 30. Im weiteren Verlauf läuft die Zahnkette 27 über eine Spannrolle 31 zurück zum Umlenkrad 23. Die Zahnkette 27 hat also einen geschlossenen Verlauf.

Jedes Kettenglied der Zahnkette 27 weist einen Zahn 32 auf. Im Bereich des Umfangsabschnitts 25 sind die Zähne 32 abgewandt vom Umlenkrad 23 angeordnet, ragen also von der Drehachse 24 her gesehen radial nach außen. In einem der Transportschiene 1 zugewandten Antriebsabschnitt 33, der Teil des Umfangsabschnitts 25 ist, kämmen die Zähne 32 der Zahnkette 27 mit Zahnaufnahmen 34 der Förderkette 2, die zwischen benachbarten Rollen 5 der Förderkette 2 gebildet sind. Flanken 35 der Zähne 32 sind zum kraftschlüssigen und abriebsminimierenden Eingriff in die Zahnaufnahmen 34 optimiert, haben also je nach den geometrischen Randbedingungen zum Beispiel ein Evolventenprofil. Über die Förderkette 2 erfolgt also ein Antrieb der Zahnkette 27.

In der Mitte des Antriebsabschnitts 33, also im Bereich der Schnittebene der Fig. 8, ist die Zahnkette 27 der Förderkette 2 unmittelbar benachbart.

Die einzelnen Zahnkettenglieder sind über Gelenkbolzen 36 gelenkig miteinander verbunden. Von den Gelenkbolzen 36 aus erstrecken sich Zahnketten-Mitnehmer 37 nach unten. Die Zahnketten-Mitnehmer 37 liegen auf Höhe der Förderketten-Mitnehmer 8 und haben in etwa die gleiche Erstreckung wie diese nach unten. Die Zahnketten-Mitnehmer 37 sind als Mitnehmerfähnchen ausgeführt, deren Mitnehmerflächen 38 senkrecht auf einer Zahnketten-Laufrichtung 39 stehen. Seitlich, also quer zur Zahnketten-Laufrichtung 39, weisen die Zahnketten-Mitnehmer 37 abgerundete Kantenabschnitte 40 auf. Längs der Zahnkette 27 sind die Zahnketten-Mitnehmer 37 mittig zwischen den Zähnen 32 angeordnet, sodass im Antriebsabschnitt 33 jedem Zahnketten-Mitnehmer 37 genau ein Förderketten-Mitnehmer 8 zugeordnet ist. Bezogen auf die Gelenkachsen der Gelenkbolzen 36 stehen die Zahnketten-Mitnehmer 37 von der Drehachse 24 her gesehen nach außen über, sodass insbesondere in der Mitte des Antriebsabschnittes 33 jeweils ein Förderketten-Mitnehmer 8 direkt neben einem Zahnketten-Mitnehmer 37 läuft.

Da der Antriebsabschnitt 33 Teil des Umfangsabschnitts 25 ist, sind die äußeren Kantenabschnitte 40 der Zahnketten-Mitnehmer 37 im Vergleich zu inneren Kantenabschnitten 41 insbesondere im Antriebsabschnitt 33 aufgespreizt. Der durch den Mittenabstand der inneren Kantenabschnitte 41 vorgegebene Abstand b benachbarter Zahnketten-Mitnehmer 37, der der Teilung der Zahnkette 27 entspricht, ist im Antriebsabschnitt 33 geringer als der Mittenabschnitt b' der äußeren Kantenabschnitte 40 der Zahnketten-Mitnehmer. Im Antriebsabschnitt 33 ist der Abstand b' der äußeren Kantenabschnitte der Zahnketten-Mitnehmer 37 gleich dem Abstand a benachbarter Förderketten-Mitnehmer. Daher ist der Abstand b benachbarter Zahnketten-Mitnehmer 37 im nicht aufgespreizten Bereich geringer als der Abstand a der Förderketten-Mitnehmer.

Aufgrund der eindeutigen Zuordnung der Förderketten-Mitnehmer 8 und der Zahnketten-Mitnehmer 37 im Antriebsabschnitt 33 und der Übereinstimmung der Mitnehmer-Abstände a und b' kommt es im Antriebsabschnitt 33 zu einer exakten Synchronisierung der Förderkette 2 mit der Zahnkette 27.

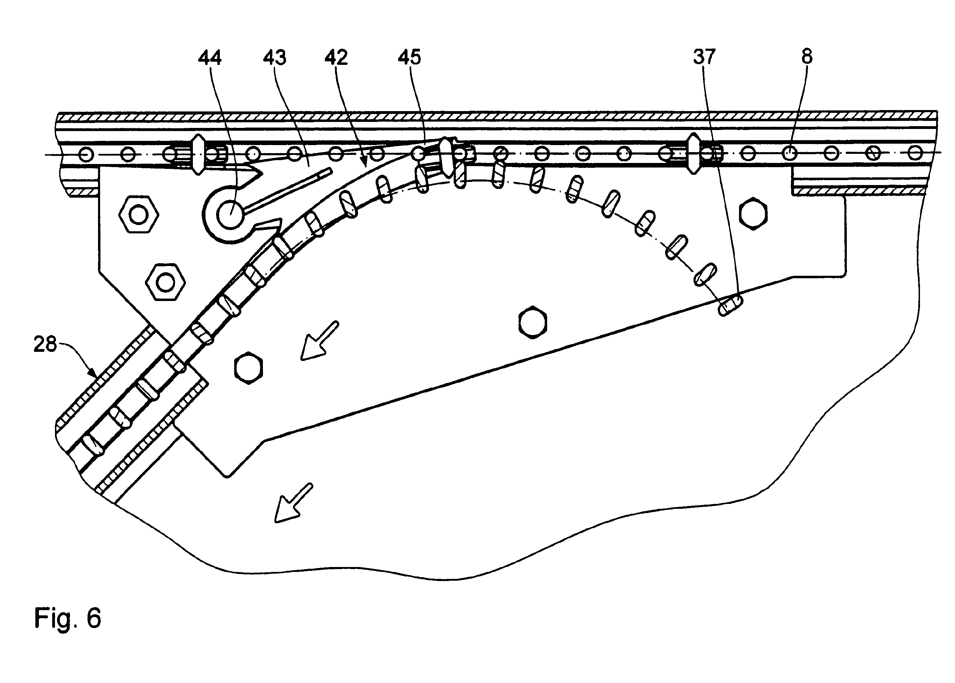

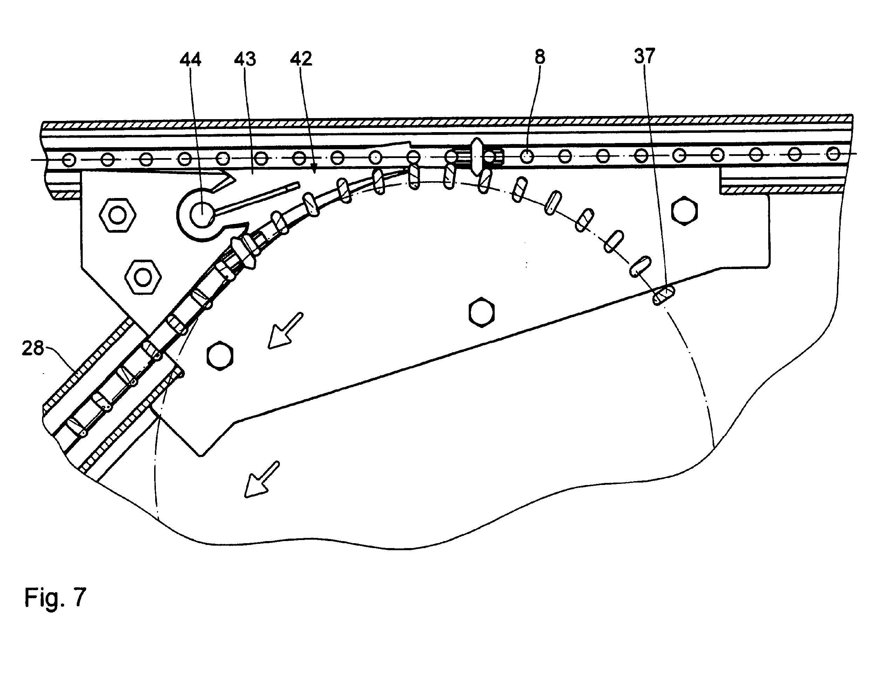

Zur Neben-Fördereinrichtung 22 gehört ferner eine Weiche 42. Letztere hat eine Weichenzunge 43, die an der Transportschiene 1 angebracht ist. Die Weichenzunge 43 ist in der Fig. 6 in einer Ausschleusstellung und in Fig. 7 in einer Durchschleusstellung dargestellt. Zwischen diesen Stellungen ist die Weichenzunge 43 um eine vertikale Gelenkachse 44 verschwenkbar. In der Ausschleusstellung bewirkt die Weichenzunge 43 ein Ausschleusen der Halteelemente 4 von der Transportschiene 1 hin zur Neben-Transportschiene 28. Die Halteelemente 4 kommen dabei mit einer Zungenspitze 45 der Weichenzunge 43 im Bereich der Mitte des Antriebsabschnitts 33 in gleitende Anlage. Die Übergabe beim Ausschleusen im Bereich der Mitte des Antriebsabschnitts 33 stellt einen nahtlosen Antriebsübergang für die Halteelemente 4 von der Förderkette auf die Zahnkette 27 sicher. Beim weiteren Ausschleusen werden die Halteelemente 4 von den Zahnketten-Mitnehmern 37 angetrieben. Die Zahnkette 27 stellt also eine Neben-Förderkette für die Halteelemente 4 nach ihrer Ausschleusung dar. Bei umgekehrter Förderrichtung 3 kann die Weiche 42 auch als Einschleusweiche dienen.

Der Aufbau der Neben-Transportschiene 28 entspricht bis auf die Profilgestaltung der Führungselemente 9 auf Höhe der Zähne 33 der Zahnkette 27, wo in der Neben-Transportschiene 28 entsprechende Aussparungen vorgesehen sind, dem Aufbau der Transportschiene 1.

In der gegenüber der Ausschleusstellung von oben her gesehen im Uhrzeigersinn verschwenkten Durchschleusstellung der Weichenzunge 43 werden die Halteelemente 4 an der Weiche 42 vorbei längs der Transportschiene 1 durchgeschleust.

Die einzelnen Glieder der Zahnkette 27 sind aus Kunststoff. Die Zahnketten-Mitnehmer 37 sind ebenfalls aus Kunststoff und einstückig mit den Zahnkettengliedern verbunden.

## Patentansprüche

1. Transport-System für hängende Gegenstände
- mit einer Transportschiene (1),
- mit einer in der Transportschiene (1) in einer Förderrichtung (3) angetrieben bewegbaren Haupt-Förderkette (2) mit einer Mehrzahl zueinander um Gelenkachsen (7) verschwenkbarer Kettenglieder, welche eine Mehrzahl äquidistant voneinander beabstandeter Mitnehmer (8) aufweist,
- wobei die Förderketten-Mitnehmer (8) mit Halteelementen (4) für die Gegenstände lösbar zusammenwirken und diese dabei in Förderrichtung (3) mitnehmen,
mit einer Neben-Fördereinrichtung (22), welche aufweist:
- eine Umlenkeinrichtung (23),
- eine zumindest abschnittsweise an einer der Haupt-Förderkette (2) zugewandten Wand (26) der Umlenkeinrichtung (23) anliegende Zahnkette (27),
- wobei die Zahnkette (27) eine Mehrzahl von Zähnen (32) aufweist, die zum Antrieb der Zahnkette (27) durch die Förderkette (2) in einem Antriebsabschnitt (33) dort, wo die Zahnkette (27) an der Umlenkeinrichtung (23) anliegt, mit Zahnaufnahmen (34) der Förderkette (2) kämmen,
wobei
- die Zahnkette (27) eine Mehrzahl von äquidistant zueinander beabstandeten Mitnehmern (37) aufweist, wobei
- die Zahnketten-Mitnehmer (37) mit Halteelementen (4) für die Gegenstände lösbar zusammenwirken und diese dabei zumindest im Antriebsabschnitt (33) in Förderrichtung (3) mitnehmen,
- im Antriebsabschnitt (33) jeweils ein Förderketten-Mitnehmer (8) direkt neben einem Zahnketten-Mitnehmer (37) läuft,
**dadurch gekennzeichnet, dass** die Zahnketten-Mitnehmer (37) als Mitnehmerfähnchen ausgeführt sind, deren Mitnehmerflächen (38) senkrecht auf einer Zahnketten-Laufrichtung (39) stehen,
wobei der Abstand benachbarter Zahnketten-Mitnehmer (37) geringer ist als der Abstand benachbarter Förderketten-Mitnehmer (8).

2. Transport-System nach Anspruch 1, **gekennzeichnet durch** mindestens eine Weiche (42) zum Ein- oder Ausschleusen von Halteelementen (4), wobei die Zahnkette (27) gleichzeitig eine Neben-Förderkette für Halteelemente (4) längs einer Ein- oder Ausschleusrichtung darstellt.

3. Transport-System nach einem der Ansprüche 1 bis 2, **dadurch gekennzeichnet, dass** die Umlenkeinrichtung (23) als um eine zu den Gelenkachsen (7) parallele Drehachse (24) drehbares Umlenkrad ausgebildet ist, wobei die Zahnkette (27) an der äußeren Umfangswand (26) des Umlenkrades anliegt.

## Claims

1. Transport system for hanging objects, comprising
- a transport rail (1);
- a main conveyor chain (2) which is drivable for movement in the transport rail (1) in a conveyance direction (3) and comprises a plurality of chain links which are pivotable relative to each other about joint axles (7), said main conveyor chain (2) comprising a plurality of equidistantly spaced entrainers (8),
- wherein the conveyor chain entrainers (8) releasably cooperate with retaining elements (4) for the objects in order to entrain these objects in the conveyance direction (3);
an auxiliary conveyor device (22) which comprises:
- a turn-around device (23);
- a toothed chain (27) which is in contact with at least part of a wall (26) of the turn-around device (23) facing the main conveyor chain (2),
- wherein the toothed chain (27) comprises a plurality of teeth (32) which mesh with tooth receivers (34) of the conveyor chain (2) in order to drive the toothed chain (27) by way of the conveyor chain (2) in a drive section (33) where the toothed chain (27) is in contact with the turn-around device (23),
wherein
- the toothed chain (27) comprises a plurality of equidistantly spaced entrainers (37), wherein
- the toothed chain entrainers (37) releasably cooperate with retaining elements (4) for the objects in order to entrain these objects in the conveyance direction (3) at least in the drive section (33);
- in the drive section (33), one conveyor chain entrainer (8) runs in
each case directly next to a toothed chain entrainer (37); **characterised in that** the toothed chain entrainers (37) are small entrainer flags whose entrainer surfaces (38) are perpendicular to a toothed chain running direction (39),
wherein the distance of adjacent toothed chain entrainers (37) is less than the distance of adjacent conveyor chain entrainers (8).

2. Transport system according to claim 1, **characterised by** at least one switch gear (42) for feeding or discharging retaining elements (4),
wherein the toothed chain (27) is simultaneously an auxiliary conveyor chain for retaining elements (4) along a feeding or discharge direction.

3. Transport system according to one of claims 1 to 2, **characterised in that** the turn-around device (23) is a turn-around wheel which is rotatable about a rotary axle (24) which is parallel to the joint axles (7),
wherein the toothed chain (27) is in contact with the outer peripheral wall (26) of the turn-around wheel.

## Revendications

1. Système de transport pour objets suspendus
- avec un rail de transport (1),
- avec une chaîne de transport principale (2) mobile, entraînée dans le rail de transport (1) dans un sens de transport (3) avec une pluralité de maillons de chaîne pivotant les uns par rapport aux autres autour d'axes d'articulation (7), qui présente une pluralité d'entraîneurs (8) espacés à équidistance les uns des autres,
- dans lequel les entraîneurs (8) de la chaîne de transport coopèrent de manière amovible avec des éléments de retenue (4) pour les objets et les entraînent dans le sens de transport (3),
avec un dispositif de transport secondaire (22) qui présente :
- un dispositif de renvoi (23),
- une chaîne dentée (27) appliquée au moins par endroits contre une paroi (26) du dispositif de renvoi (23) tournée vers la chaîne de transport principale (2),
- dans lequel la chaîne dentée (27) présente une pluralité de dents (32) qui s'engrènent pour l'entraînement de la chaîne dentée (27) par la chaîne de transport (2) dans une section d'entraînement (33) là où la chaîne dentée (27) s'applique contre le dispositif de renvoi (23), avec des logements de dents (34) de la chaîne de transport (2),
dans lequel
- la chaîne dentée (27) présente une pluralité d'entraîneurs (37) espacés à équidistance les uns des autres,
- les entraîneurs de chaîne dentée (37) coopérant de manière amovible avec des éléments de retenue (4) pour les objets et les entraînant au moins dans la section d'entraînement (33) dans le sens de transport (3),
- dans la section d'entraînement (33) passant respectivement un entraîneur de chaîne de transport (8) directement à côté d'un entraîneur de chaîne dentée (37),
les entraîneurs de chaîne dentée (37) sont réalisés comme des petits talons d'entraînement, dont les surfaces d'entraînement (38) se trouvent perpendiculaires à un sens de passage de chaîne dentée (39),
dans lequel la distance entre des entraîneurs de chaîne dentée (37) contigus est inférieure à la distance entre des entraîneurs de chaîne de transport (8) contigus.

2. Système de transport selon la revendication 1, **caractérisé par** au moins un dispositif d'aiguillage (42) pour introduire ou retirer des éléments de retenue (4), dans lequel la chaîne dentée (27) constitue simultanément une chaîne de transport secondaire pour éléments de retenue (4) le long d'un sens d'introduction ou de retrait.

3. Système de transport selon l'une quelconque des revendications 1 à 2, **caractérisé en ce que** le dispositif de renvoi (23) est réalisé comme une roue de renvoi rotative autour d'un axe de rotation (24) parallèle aux axes d'articulation (7), dans lequel la chaîne dentée (27) s'applique contre la paroi périphérique (26) extérieure de la roue de renvoi.
